# EUROPÄISCHE PATENTSCHRIFT

(11) **EP 4 240 989 B1**
(45) Veröffentlichungstag und Bekanntmachung des Hinweises auf die Patenterteilung: **23.07.2025**
(21) Anmeldenummer: 21815106.6
(22) Anmeldetag: 21.10.2021
(51) Int. Cl.: F16H 55/12

(54) **ZAHNRADANORDNUNG, AUFWEISEND EIN AUS SEGMENTEN ZUSAMMENGESETZTES ZAHNRAD**
GEAR ASSEMBLY COMPRISING A GEAR COMPOSED OF SEGMENTS
ENSEMBLE ROUE DENTÉE COMPRENANT UNE ROUE DENTÉE COMPOSÉE DE SEGMENTS

(30) Priorität: 06.11.2020 DE 102020006830
(43) Veröffentlichungstag der Anmeldung: 13.09.2023
(73) Patentinhaber: SEW-EURODRIVE GmbH & Co. KG, 76646 Bruchsal (DE)
(72) Erfinder: POSA, Jukka, 48600 Kotka (FI); RANTA, Henri, 03600 Karkkila (FI); RIEKKINEN, Markus, 05810 Hyvinkää (FI)
(86) Internationale Anmeldenummer: PCT/EP2021/025418
(87) Internationale Veröffentlichungsnummer: WO 2022/096145

(56) Entgegenhaltungen:
- WO-A1-2017/069626
- DE-U1- 8 213 674
- US-A- 1 184 174
- US-A- 2 999 396
- US-A- 907 459
- US-A1- 2014 023 978

## Beschreibung

Die Erfindung betrifft eine Zahnradanordnung, aufweisend ein aus Segmenten zusammengesetztes Zahnrad.

**Aus der** US 1 184 174 A **ist als nächstliegender Stand der Technik eine Zahnradanordnung bekannt, bei welcher** ein Zahnrad an seiner radialen Außenseite eine Zähne aufweisende Verzahnung aufweist.

**Aus der** US 2014/ 0 023 978 A1 **ist ein Trommelantrieb bekannt.**

**Aus der** US 2 999 396 A **ist ein Kettenantrieb bekannt.**

**Aus der** DE 82 13 674 U1 **ist eine Vorrichtung zum Antreiben einer Trommel bekannt.**

**Aus der** DE 370 560 A **ist ein unterteiltes Zahnrad bekannt.**

**Aus der** WO 2017/069626 A1 **ist ein Verfahren zum Herstellen eines Segments eines Zahnrads bekannt.**

**Aus der** US 907 459 A **ist ein segmentiertes Federrad bekannt.**

Der Erfindung liegt daher die Aufgabe zugrunde, eine Zahnradanordnung weiterzubilden, wobei das Zahnrad drehfest, insbesondere stabil, mit einem drehbar gelagerten Teil verbunden sein soll.

Erfindungsgemäß wird die Aufgabe bei der Zahnradanordnung nach den in Anspruch 1 angegebenen Merkmalen gelöst.

Von Vorteil ist dabei, dass das aus einzelnen separaten Segmenten zusammengesetzte Zahnrad stabil und drehfest mit dem drehbar gelagerten Hohlwellenteil verbunden ist. Die radial zwischengeordneten Halteeinheiten bewirken ein elastisches Halten, so dass Schwingungen abdämpfbar sind und außerdem eine verspannungsfreie Anordnung der Segmente aufrechterhaltbar ist. Darüber hinaus ist ein in Umfangsrichtung konstanter radialer Abstand zwischen Segmenten und Hohlwellenbereich bewirkbar. Der Hohlwellenbereich ist beispielsweise bei einer Trommel, wie Zementtrommel oder dergleichen, ausgebildet. Vorzugswiese ist das Teil ein Hohlteil. Durch die erfindungsgemäß elastische Aufnahme der Segmente ist auch ein Ausgleich von Fertigungstoleranzen oder anderen Abweichungen vom Rundlauf ermöglicht.

Bei einer vorteilhaften Ausgestaltung ist ein jeweiliges Segment mit seinem in Umfangsrichtung nächstliegenden Segment verbunden, insbesondere mittels Schrauben verbunden ist. Von Vorteil ist dabei, dass die Segmente eine Ringstruktur bilden, welche durch die Halteeinheiten relativ zum Hohlwellenbereich positioniert ist.

Bei einer vorteilhaften Ausgestaltung weist jedes Segment an seinem in Umfangsrichtung vorne liegenden Endbereichs einen ersten Wandbereich auf, insbesondere welcher sich in axialer Richtung und in radialer Richtung weiter erstreckt als in Umfangsrichtung,
wobei jedes Segment an seinem in Umfangsrichtung hinten liegenden Endbereichs einen zweiten Wandbereich aufweist, insbesondere welcher sich in axialer Richtung und in radialer Richtung weiter erstreckt als in Umfangsrichtung,
wobei der erste Wandbereich an einem zweiten Wandbereich eines nächstbenachbarten Segments anliegt und mittels der Schrauben verbunden ist. Von Vorteil ist dabei, dass die gegenseiteigen Berührflächen der Wandbereiche jeweils an genau einer jeweiligen einzigen Position in Umfangsrichtung angeordnet ist, sich also axialer Richtung und in radialer Richtung erstrecken, aber nicht in Umfangsrichtung. Somit ist ein gegenseitiges Ausrichten der Segmente in einfacher Weise ermöglicht.

**Erfindungsgemäß** weist jedes Segment eine axial durchgehende Ausnehmung, insbesondere ein axial durchgehendes Bohrloch, auf. Von Vorteil ist dabei, dass die Halteeinheit mittig am Segment abstützt und mittels des Bolzens das Segment nach radial außen drückbar ist, so dass ein maximaler Abstand des Segments zum Hohlwellenbereich gewährleistet ist.

Bei einer vorteilhaften Ausgestaltung weist jedes Segment insbesondere in Umfangsrichtung mittig einen Hohlabschnitt auf, welcher eine axial durchgehende Ausnehmung aufweist. Von Vorteil ist dabei, dass ein Bolzen durch die Ausnehmung durchführbar ist und somit das Segment nach radial außen drückbar ist, um einen radialen Abstand zu maximieren.

**Erfindungsgemäß** ist ein Bolzen in die Ausnehmung gesteckt, wobei der Bolzen axial beidseitig hervorragt. Von Vorteil ist dabei, dass der Bolzen in der Ausnehmung spielfrei aufnehmbar ist.

**Erfindungsgemäß** weist die Halteeinheit ein erstes Federteil auf, das an dem Hohlwellenbereich, insbesondere am radial äußeren Umfang des Hohlwellenbereichs, abgestützt ist und mit einem ersten Ösenbereich verbunden, insbesondere stoffschlüssig verbunden und/oder einteilig, insbesondere einstückig, ausgeführt ist,
wobei der Bolzen durch den ersten Ösenbereich hindurchragt. Von Vorteil ist dabei, dass mittels der Ösenbereiche von den Federteilen auf den Bolzen Kraft übertragbar ist.

**Erfindungsgemäß** weist die Halteeinheit ein zweites Federteil auf, das an dem Hohlwellenbereich, insbesondere am radial äußeren Umfang des Hohlwellenbereichs, abgestützt ist und mit einem zweiten Ösenbereich verbunden, insbesondere stoffschlüssig verbunden und/oder einteilig, insbesondere einstückig, ausgeführt ist,
wobei der Bolzen durch den zweiten Ösenbereich hindurchragt,
- wobei das zweite Federteil an einem Bereich des Hohlwellenteils abgestützt ist, welcher in Umfangsrichtung beabstandet ist von demjenigen Bereich des Hohlwellenteils, an welchem das erste Federteil abgestützt ist,
- und/ wobei das zweite Federteil an einem Bereich des Hohlwellenteils abgestützt ist, welcher auf der von demjenigen Bereich des Hohlwellenteils in Umfangsrichtung abgewandten Seite des Bolzens angeordnet ist, an welchem das erste Federteil abgestützt ist.

Von Vorteil ist dabei, dass der Bolzen im Wesentlichen nur mit einer radialen Kraftkomponente beaufschlagt ist und keine wesentliche tangentiale oder axiale Kraftkomponente auf den Bolzen wirkt.

Bei einer vorteilhaften Ausgestaltung ist das Federteil ein Winkelblech und/oder ein Stanz-Biegeteil,
insbesondere wobei die Biegekante axial ausgerichtet ist. Von Vorteil ist dabei, dass eine kostengünstige Herstellung ermöglicht ist und eine hohe Steifigkeit in axialer Richtung und auch in Umfangsrichtung bewirkbar ist.

Bei einer vorteilhaften Ausgestaltung ist der Bolzen durch ein weiteres erstes Ösenteil und ein weiteres zweites Ösenteil durchgesteckt, wobei das erste Federteil mit dem weiteren ersten Ösenteil verbunden ist und das zweite Federteil mit dem weiteren zweiten Ösenteil verbunden ist,
wobei das erste Ösenteil von dem weiteren ersten Ösenteil axial beabstandet ist,
wobei das zweite Ösenteil von dem weiteren zweiten Ösenteil axial beabstandet ist. Von Vorteil ist dabei, dass eine stabile Abstützung des Bolzens erreichbar ist und somit ein Kippen des Bolzens verhinderbar ist.

Bei einer vorteilhaften Ausgestaltung weist jedes Segment an seiner radial äußeren Seite Zähne einer Verzahnung auf,
wobei die Verzahnung geradverzahnt ist, insbesondere so dass sich die Zähne in axialer Richtung erstrecken, oder schrägverzahnt, insbesondere wobei die Verzahnung den Wandbereich zumindest teilweise in Umfangsrichtung überragt. Von Vorteil ist dabei, dass ein großes Zahnrad aus einer Vielzahl von kleinen Segmenten zusammensetzbar ist. Somit sind kleine Fertigungsmaschinen, insbesondere Verzahnungsmaschinen, notwendig.

Bei einer vorteilhaften Ausgestaltung sind das erste und das zweite Federteil jeweils aus Stahlblech ausgebildet. Von Vorteil ist dabei, dass eine kostengünstige Herstellung erreichbar ist.

Bei einer vorteilhaften Ausgestaltung weisen das erste und das zweite Federteil jeweils einen ersten Bereich auf, der tangential auf dem Hohlwellenteil aufliegt, und jeweils einen zweiten Bereich aufweisen, der einen nichtverschwindenden Winkel zum ersten Bereich desselben Federteils aufweist,

insbesondere wobei der Winkel einen Winkelbetrag aufweist, der zwischen 5° und 50° liegt. Von Vorteil ist dabei, dass eine radiale Kraftkomponente bewirkbar ist.

Bei einer vorteilhaften Ausgestaltung ist jedem Segment eine jeweilige Halteeinheit eineindeutig, insbesondere also bijektiv, zugeordnet. Das heißt, dass jedem jeweiligen Segment jeweils genau eine einzige jeweilige Halteeinheit zugeordnet ist. Die Zuordnung ist also eindeutig. Von Vorteil ist dabei, dass jedes Segment radial beabstandet ist und somit kein "Durchhängen" auftreten kann.

Weitere Vorteile ergeben sich aus den Unteransprüchen. Die Erfindung wird durch die beiliegenden Ansprüche definiert.

Die Erfindung wird nun anhand von schematischen Abbildungen näher erläutert:
In der Figur 1 ist ein aus Segmenten 1 zusammengesetztes Zahnrad in Seitenansicht dargestellt.
In der Figur 2 ist eine Hälfte des Zahnrads in Schrägansicht dargestellt.
In der Figur 3 ist eine Halteeinheit für eines der Segmente 1 in Seitenansicht dargestellt.

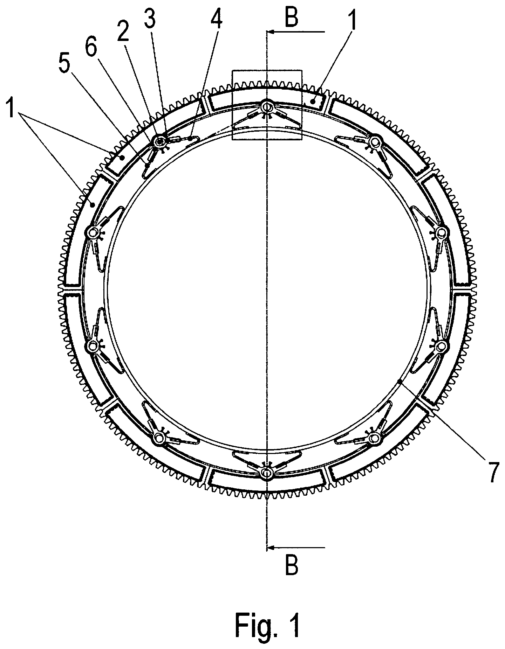

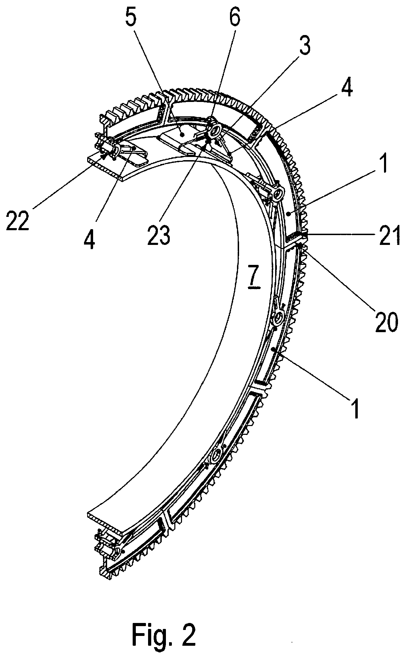

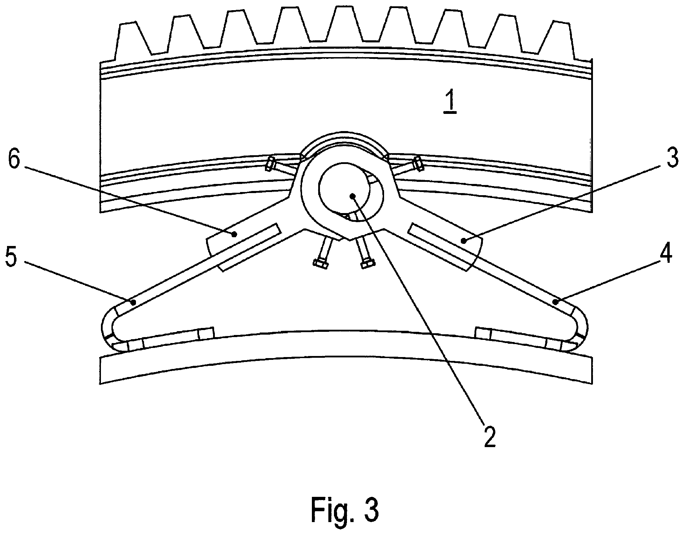

Wie in den Figuren 1 bis 3 dargestellt, weist das Zahnrad in Umfangsrichtung hintereinander angeordnete Segmente 1 auf, insbesondere zehn Segmente 1 auf.

An seinem in Umfangsrichtung vorderen Endbereich weist das Segment 1 einen ersten Wandabschnitt 20 auf. Der erste Wandabschnitt 20 erstreckt sich in radialer Richtung weiter als in axialer Richtung und als in Umfangsrichtung.

Ebenso weist das Segment 1 an seinem in Umfangsrichtung hinteren Endbereich einen zweiten Wandabschnitt 20 auf. Der zweite Wandabschnitt 20 erstreckt sich in radialer Richtung weiter als in axialer Richtung und als in Umfangsrichtung.

Jeder erste Wandabschnitt 20 eines Segments 1 liegt an einem zweiten Wandabschnitt 20 eines zu dem Segment 1 nächstbenachbarten Segments 1 an, wobei dieser erste Wandabschnitt 20 mittels Schrauben 21 an diesen zweiten Wandabschnitt 20 angedrückt und verbunden ist. Hierzu sind die Schrauben durch durch die Wandabschnitte 20 durchgehende Ausnehmungen durchgeführt. Die Schrauben 21 sind tangential gerichtet angeordnet.

Jedes Segment 1 ist mittels einer Halteeinheit, insbesondere Spanneinheit, gehalten, die auf einem Hohlwellenbereich 7, insbesondere Trommel, angeordnet ist.

Die Halteeinheiten bewirken eine gleichmäßige Beabstandung der Segmente 1 zum Hohlwellenbereich 7 hin. In dem von den Segmenten 1 überdeckten axialen Bereich weist der Hohlwellenbereich 7 einen kreiszylindrischen Außenumfang auf.

Jedes Segment 1 weist an seiner radial äußeren Seite Zähne einer Verzahnung auf. Die Verzahnung ist geradverzahnt, insbesondere so dass sich die Zähne in axialer Richtung erstrecken.

In Umfangsrichtung ist somit die aus den von den Segmenten 1 getragenen Zähnen zusammengesetzte Verzahnung ununterbrochen ausgeführt.

Insbesondere mittig, an seiner radialen Innenseite ist am Segment 1 jeweils ein Hohlabschnitt 22 ausgeformt, welcher eine axial durchgehende Ausnehmung aufweist, durch welche ein Bolzen 2 hindurchragt.

Auf den Bolzen ist ein erstes Ösenteil 3 aufgesteckt und ein zweites Ösenteil 6. Das zweite Ösenteil 6 ist mit einem zweiten Federteil 5 verbunden, insbesondere schweißverbunden. Das zweite Federteil 5 ist auf dem Hohlwellenteil 7 abgestützt und drückt somit über das zweite Ösenteil 6 den Bolzen 2 und somit das zugehörige Segment 1 nach radial außen.

Das erste Ösenteil 3 ist mit einem ersten Federteil 4 verbunden, insbesondere schweißverbunden. Das erste Federteil 4 ist auf dem Hohlwellenteil 7 abgestützt und drückt somit über das erste Ösenteil 3 den Bolzen 2 und somit das zugehörige Segment 1 nach radial außen.

Das erste Federteil 4 ist in Umfangsrichtung vom zweiten Federteil 5 beabstandet. Um einen Spannungsausgleich zu erzeugen, weisen das erste Ösenteil 3 und das zweite Ösenteil 6 jeweils Langlöcher auf, durch welche die Bolzen 2 durchgesteckt sind. Die größte lichte Weite des jeweiligen Langlochs ist in einer jeweiligen Richtung vorgesehen, die einen nicht verschwindenden Winkel zur radialen Richtung aufweist. Somit ist ein elastisches Drücken der Segmente 1 gesichert und die tangentiale Komponente der von den Federteilen 4 und 5 bewirkten elastischen Kraft.

Der Bolzen 2 ist in der durch den Hohlabschnitt 22 durchgehenden Ausnehmung im Wesentlichen spielfrei aufgenommen und geführt.

Der Bolzen 2 ragt aus dem Hohlabschnitt 22 axial beidseitig hervor. Das erste und zweite Ösenteil (3, 6) ist an einem ersten der beiden axial hervorragenden Bereiche des Bolzens 2 befestigt. Am anderen der beiden axial hervorragenden Bereiche des Bolzens 2 sind ein weiteres erstes und zweites Ösenteil (3, 6) angeordnet, durch welche der Bolzen 2 hindurchragt. Dabei weisen das weitere erste und das weitere zweite Ösenteil jeweils ein Langloch auf, dessen größte lichte Ausdehnung wiederum einen oder den nicht verschwindenden Winkel zur radialen Richtung aufweist.

Das erste Federteil 4 ist als Blechwinkel, insbesondere Winkelblech, ausgeführt, dessen erster Schenkel auf dem Hohlwellenbereich 7 abgestützt ist und dessen zweiter Schenkel mit dem ersten Ösenteil 3 verbunden ist, das in Umdrehungsrichtung vom zweiten Ösenteil 6 beabstandet ist.

Die Winkelbleche erstrecken sich im Wesentlichen in Umfangsrichtung und in axialer Richtung. Die Biegekante der Winkelbleche erstreckt sich in axialer Richtung. Somit ist eine hohe Steifigkeit in axialer Richtung erreicht.

Die vorzugsweise als Stanz-Biegeteile hergestellten Federteile (4, 5) bewirken somit eine hohe Stabilität.

Erfindungsgemäß wird also jedes Segment von der dem jeweiligen Segment 1 zugeordneten, elastisch verformten, insbesondere vorgespannten Halteeinheit mittig, insbesondere in Umfangsrichtung mittig, nach radial außen gedrückt.

Somit ist der aus den Segmenten 1 gebildete Ring in Umfangsrichtung radial gleichmäßig, insbesondere konstant, beabstandet von dem Hohlwellenbereich 7.

Bei weiteren erfindungsgemäßen Ausführungsbeispielen wird statt der Geradverzahnung eine Schrägverzahnung vorgesehen, so dass die Zähne entlang einer Schraubenlinie sich erstrecken. Dabei trägt der Wandabschnitt 20 somit nur einen Teil eines Zahns, dessen restlicher Teil vom Wandabschnitt 20 eines nächstbenachbarten Zahns getragen wird.

### Bezugszeichenliste

1 Segment
2 Bolzen
3 erstes Ösenteil
4 erstes Federteil
5 zweites Federteil
6 zweites Ösenteil
20 Wandabschnitt
21 Schrauben
22 Hohlabschnitt
23 Klemmschraube
7 Hohlwellenbereich, insbesondere Trommel

## Patentansprüche

1. Zahnradanordnung, aufweisend ein aus Segmenten zusammengesetztes Zahnrad,
wobei jedes Segment (1) mittels einer jeweiligen Halteeinheit an einem Hohlwellenbereich (7) eines drehbar gelagerten Teils, insbesondere Trommel, abgestützt ist,
**dadurch gekennzeichnet, dass**
**jedes Segment (1) eine axial durchgehende Ausnehmung aufweist,**
**wobei ein Bolzen (2) in die Ausnehmung gesteckt ist, wobei der Bolzen (2) axial beidseitig hervorragt,**
**wobei die Halteeinheit ein erstes Federteil (4) aufweist, das an dem Hohlwellenbereich** (7), **abgestützt ist und mit einem ersten Ösenbereich verbunden,** ausgeführt ist,
**wobei der Bolzen (2) durch den ersten Ösenbereich hindurchragt,**
**wobei die Halteeinheit ein zweites Federteil (5) aufweist, das an dem Hohlwellenbereich (7), abgestützt ist und mit einem zweiten Ösenbereich verbunden, insbesondere stoffschlüssig verbunden und/oder einteilig, insbesondere einstückig, ausgeführt ist,**
**wobei der Bolzen (2) durch den zweiten Ösenbereich hindurchragt,**
- **wobei das zweite Federteil (5) an einem Bereich des Hohlwellenteils abgestützt ist, welcher in Umfangsrichtung beabstandet ist von demjenigen Bereich des Hohlwellenteils, an welchem das erste Federteil (4) abgestützt ist,**
- **und/ wobei das zweite Federteil (5) an einem Bereich des Hohlwellenteils abgestützt ist, welcher auf der von demjenigen Bereich des Hohlwellenteils in Umfangsrichtung abgewandten Seite des Bolzens (2) angeordnet ist, an welchem das erste Federteil (4) abgestützt ist,**
**wobei das erste Federteil (4) in Umfangsrichtung vom zweiten Federteil (5) beabstandet ist,**
**wobei zum Erzeugen eines Spannungsausgleichs das erste Ösenteil (3) und das zweite Ösenteil (6) jeweils Langlöcher aufweisen, durch welche die Bolzen (2) durchgesteckt sind,**
**wobei die größte lichte Weite des jeweiligen Langlochs in einer jeweiligen Richtung vorgesehen ist, die einen nicht verschwindenden Winkel zur radialen Richtung aufweist.**

2. Zahnradanordnung nach Anspruch 1,
**dadurch gekennzeichnet, dass**
ein jeweiliges Segment (1) mit seinem in Umfangsrichtung nächstliegenden mittels Schrauben (21) verbunden ist.

3. Zahnradanordnung nach **Anspruch 2,**
**dadurch gekennzeichnet, dass**
jedes Segment (1) an seinem in Umfangsrichtung vorne liegenden Endbereichs einen ersten Wandbereich aufweist, insbesondere welcher sich in axialer Richtung und in radialer Richtung weiter erstreckt als in Umfangsrichtung,
wobei jedes Segment (1) an seinem in Umfangsrichtung hinten liegenden Endbereichs einen zweiten Wandbereich aufweist, insbesondere welcher sich in axialer Richtung und in radialer Richtung weiter erstreckt als in Umfangsrichtung,
wobei der erste Wandbereich an einem zweiten Wandbereich eines nächstbenachbarten Segments anliegt und mittels der Schrauben (21) verbunden ist.

4. Zahnradanordnung nach einem der vorangegangenen Ansprüche,
**dadurch gekennzeichnet, dass**
**jedes Segment (1) insbesondere in Umfangsrichtung mittig einen Hohlabschnitt (22) aufweist, welcher eine axial durchgehende Ausnehmung aufweist.**

5. Zahnradanordnung nach einem der vorangegangenen Ansprüche,
**dadurch gekennzeichnet, dass**
das Federteil (4) ein Winkelblech ist und/oder ein Stanz-Biegeteil ist,
insbesondere wobei die Biegekante axial ausgerichtet ist.

6. Zahnradanordnung nach einem der vorangegangenen Ansprüche,
**dadurch gekennzeichnet, dass**
der Bolzen (2) durch ein weiteres erstes Ösenteil (3) und ein weiteres zweites Ösenteil (6) durchgesteckt ist, wobei das erste Federteil (4) mit dem weiteren ersten Ösenteil (3) verbunden ist und das zweite Federteil (5) mit dem weiteren zweiten Ösenteil (6) verbunden ist,
wobei das erste Ösenteil (3) von dem weiteren ersten Ösenteil (3) axial beabstandet ist,
wobei das zweite Ösenteil (6) von dem weiteren zweiten Ösenteil (6) axial beabstandet ist.

7. Zahnradanordnung nach einem der vorangegangenen Ansprüche,
**dadurch gekennzeichnet, dass**
jedes Segment (1) an seiner radial äußeren Seite Zähne einer Verzahnung aufweist,
wobei die Verzahnung geradverzahnt ist, insbesondere so dass sich die Zähne in axialer Richtung erstrecken, oder schrägverzahnt, insbesondere wobei die Verzahnung den Wandbereich zumindest teilweise in Umfangsrichtung überragt.

8. Zahnradanordnung nach einem der vorangegangenen Ansprüche,
**dadurch gekennzeichnet, dass**
das erste und das zweite Federteil (4, 5) jeweils aus Stahlblech ausgebildet sind.

9. Zahnradanordnung nach einem der vorangegangenen Ansprüche,
**dadurch gekennzeichnet, dass**
das erste und das zweite Federteil (4, 5) jeweils einen ersten Bereich aufweisen, der tangential auf dem Hohlwellenteil aufliegt, und jeweils einen zweiten Bereich aufweisen, der einen nichtverschwindenden Winkel zum ersten Bereich desselben Federteils (4, 5) aufweist,
insbesondere wobei der Winkel einen Winkelbetrag aufweist, der zwischen 5° und 50° liegt.

10. Zahnradanordnung nach einem der vorangegangenen Ansprüche,
**dadurch gekennzeichnet, dass**
jedem Segment (1) eine jeweilige Halteeinheit eineindeutig, insbesondere also bijektiv, zugeordnet ist.

## Claims

1. A gear wheel arrangement, having a gear wheel composed of segments,
wherein each segment (1) is supported by means of a respective holding unit on a hollow-shaft region (7) of a rotatably mounted part, in particular drum,
**characterised in that**
each segment (1) has an axially continuous cutout,
with a bolt (2) being inserted into the cutout, with the bolt (2) protruding axially on either side,
with the holding unit having a first spring part (4) which is supported on the hollow-shaft region (7) and is embodied connected to a first eye region,
with the bolt (2) protruding through the first eye region,
with the holding unit having a second spring part (5) which is supported on the hollow-shaft region (7) and is connected, in particular connected by a material-formed bond, to a second eye region and/or is embodied in one part, in particular in one piece,
with the bolt (2) protruding through the second eye region,
- with the second spring part (5) being supported on a region of the hollow-shaft part which is spaced apart in the circumferential direction from that region of the hollow-shaft part on which the first spring part (4) is supported,
- and with the second spring part (5) being supported on a region of the hollow-shaft part which is arranged on that side of the bolt (2) which faces away in the circumferential direction from that region of the hollow-shaft part on which the first spring part (4) is supported,
with the first spring part (4) being spaced apart in the circumferential direction from the second spring part (5),
with, in order to effect stress relief, the first eye part (3) and the second eye part (6) each having elongate holes through which the bolts (2) are inserted,
with the greatest internal width of the respective elongate hole being provided in a respective direction which is at a non-vanishing angle to the radial direction.

2. A gear wheel arrangement according to claim 1,
**characterised in that**
a respective segment (1) is connected to its [word missing] closest in the circumferential direction by means of screws (21).

3. A gear wheel arrangement according to claim 2,
**characterised in that**
each segment (1) has on its end region which is to the fore in the circumferential direction a first wall region, in particular which extends farther in the axial direction and in the radial direction than in the circumferential direction,
with each segment (1) having on its end region which is to the rear in the circumferential direction a second wall region, in particular which extends farther in the axial direction and in the radial direction than in the circumferential direction,
with the first wall region lying against a second wall region of a next-adjacent segment and being connected by means of the screws (21).

4. A gear wheel arrangement according to one of the preceding claims,
**characterised in that**
each segment (1) in particular in the circumferential direction has centrally a hollow portion (22) which has an axially continuous cutout.

5. A gear wheel arrangement according to one of the preceding claims,
**characterised in that**
the spring part (4) is a sheet-metal angled section and/or is a stamped and bent part,
in particular with the bent edge being oriented axially.

6. A gear wheel arrangement according to one of the preceding claims,
**characterised in that**
the bolt (2) is inserted through a further first eye part (3) and a further second eye part (6), with the first spring part (4) being connected to the further first eye part (3) and the second spring part (5) being connected to the further second eye part (6),
with the first eye part (3) being axially spaced apart from the further first eye part (3),
with the second eye part (6) being axially spaced apart from the further second eye part (6).

7. A gear wheel arrangement according to one of the preceding claims,
**characterised in that**
each segment (1) has teeth of gearing on its radially outer side,
with the gearing being spur-geared, in particular so that the teeth extend in the axial direction, or helical, in particular with the gearing protruding over the wall region at least partially in the circumferential direction.

8. A gear wheel arrangement according to one of the preceding claims,
**characterised in that**
the first and the second spring part (4, 5) are each formed of sheet steel.

9. A gear wheel arrangement according to one of the preceding claims,
**characterised in that**
the first and the second spring part (4, 5) each have a first region which lies tangentially on the hollow-shaft part, and each have a second region which is at a non-vanishing angle to the first region of the same spring part (4, 5),
in particular with the angle having an angular value of between 5° and 50°.

10. A gear wheel arrangement according to one of the preceding claims,
**characterised in that**
with each segment (1) there is associated one-to-one, in particular therefore bijectively, a respective holding unit.

## Revendications

1. Ensemble à roue dentée, muni d'une roue dentée composée de segments,
chaque segment (1) étant en appui, au moyen d'une unité respective de maintien, sur une zone d'arbre creux (7) d'une partie montée à rotation, d'un tambour en particulier,
**caractérisé par le fait que**
chaque segment (1) comporte un évidement axialement ininterrompu,
un tenon (2) étant emboîté dans ledit évidement, lequel tenon (2) fait saillie axialement de part et d'autre,
l'unité de maintien étant dotée d'une première pièce élastique (4) qui prend appui sur la zone d'arbre creux (7) et est conçue en liaison avec une première région pourvue d'un œillet,
le tenon (2) traversant ladite première région pourvue d'un œillet,
sachant que ladite unité de maintien est nantie d'une seconde pièce élastique (5) qui prend appui sur ladite zone d'arbre creux (7) et est reliée, en particulier reliée matériellement à une seconde région pourvue d'un œillet et/ou est réalisée d'une seule pièce, notamment d'un seul tenant,
ledit tenon (2) traversant ladite seconde région pourvue d'un œillet,
- sachant que la seconde pièce élastique (5) est en appui sur une région de la partie d'arbre creux située, dans la direction du pourtour, à distance de la région de ladite partie d'arbre creux sur laquelle la première pièce élastique (4) est en appui,
- et sachant que ladite seconde pièce élastique (5) est en appui sur une région de la partie d'arbre creux située du côté du tenon (2) qui pointe, dans la direction du pourtour, à l'opposé de la région de ladite partie d'arbre creux sur laquelle ladite première pièce élastique (4) est en appui,
laquelle première pièce élastique (4) se trouve à distance de la seconde pièce élastique (5) dans la direction du pourtour,
étant précisé que, pour instaurer un équilibrage de contraintes, la première partie (3) pourvue d'un œillet, et la seconde partie (6) pourvue d'un œillet, sont respectivement percées de trous oblongs à travers lesquels les tenons (2) sont emboîtés,
le diamètre intérieur maximal du trou oblong considéré étant prévu dans une direction respective décrivant un angle non évanescent par rapport à la direction radiale.

2. Ensemble à roue dentée, selon la revendication 1,
**caractérisé par le fait**
**qu'**un segment (1) considéré est relié, au moyen de vis (21), au segment occupant la position la plus proche dans la direction du pourtour.

3. Ensemble à roue dentée, selon la revendication 2,
**caractérisé par le fait que**
chaque segment (1) comporte, au niveau de sa région extrême située à l'avant dans la direction du pourtour, une première zone de paroi dont l'étendue est notamment plus grande, dans la direction axiale et dans la direction radiale, que dans ladite direction du pourtour,
chaque segment (1) comportant, au niveau de sa région extrême située à l'arrière dans la direction du pourtour, une seconde zone de paroi dont l'étendue est notamment plus grande, dans la direction axiale et dans la direction radiale, que dans ladite direction du pourtour,
sachant que ladite première zone de paroi est en applique contre une seconde zone de paroi d'un segment occupant la position la plus voisine, et est reliée au moyen des vis (21).

4. Ensemble à roue dentée, selon l'une des revendications précédentes,
**caractérisé par le fait que**
chaque segment (1) est muni centralement, en particulier dans la direction du pourtour, d'une zone creuse (22) comportant un évidement axialement ininterrompu.

5. Ensemble à roue dentée, selon l'une des revendications précédentes,
**caractérisé par le fait que**
la pièce élastique (4) est une tôle coudée et/ou une pièce venue d'estampage et de pliage, l'arête pliée étant notamment orientée dans le sens axial.

6. Ensemble à roue dentée, selon l'une des revendications précédentes,
**caractérisé par le fait que**
le tenon (2) est emboîté à travers une première partie supplémentaire (3) pourvue d'un œillet et à travers une seconde partie supplémentaire (6) pourvue d'un œillet, la première pièce élastique (4) étant reliée à ladite première partie supplémentaire (3) pourvue d'un œillet, et la seconde pièce élastique (5) étant reliée à ladite seconde partie supplémentaire (6) pourvue d'un œillet,
la première partie (3) pourvue d'un œillet étant située axialement à distance de ladite première partie supplémentaire (3) pourvue d'un œillet,
la seconde partie (6) pourvue d'un œillet étant située axialement à distance de ladite seconde partie supplémentaire (6) pourvue d'un œillet.

7. Ensemble à roue dentée, selon l'une des revendications précédentes,
**caractérisé par le fait que**
chaque segment (1) comporte des dents d'une denture sur son côté radialement extérieur,
laquelle denture est une denture droite, en particulier de façon telle que les dents s'étendent dans la direction axiale, ou bien une denture hélicoïdale, sachant notamment que ladite denture dépasse au moins en partie au-delà de la zone de paroi dans la direction du pourtour.

8. Ensemble à roue dentée, selon l'une des revendications précédentes,
**caractérisé par le fait que**
les première et seconde pièces élastiques (4, 5) sont respectivement produites en tôle d'acier.

9. Ensemble à roue dentée, selon l'une des revendications précédentes,
**caractérisé par le fait que**
les première et seconde pièces élastiques (4, 5) sont respectivement dotées d'une première région reposant tangentiellement sur la partie d'arbre creux, et sont respectivement nanties d'une seconde région décrivant un angle non évanescent par rapport à la première région de la même pièce élastique (4, 5),
ledit angle présentant notamment une valeur angulaire comprise entre 5° et 50°.

10. Ensemble à roue dentée, selon l'une des revendications précédentes,
**caractérisé par le fait**
**qu'**une unité respective de maintien est associée à chaque segment (1) de manière biunivoque, donc notamment de manière bijective.
